# EUROPÄISCHE PATENTANMELDUNG

(11) **EP 2 080 624 A1**
(43) Veröffentlichungstag der Anmeldung: **22.07.2009**
(21) Anmeldenummer: 09001678.3
(22) Anmeldetag: 21.05.2004
(51) Int. Cl.: B41J 3/407, B44C 5/04

(54) **Verfahren zum Herstellen eines Bauteils mit einer bedruckten Echtholzoberfläche vorbestimmen Aussehens**

(30) Priorität: 23.05.2003 DE 10323412
(62) Teilanmeldung aus: 04012101.4
(71) Anmelder: Bauer, Jörg R., 88250 Weingarten (DE)
(72) Erfinder: Bauer, Jörg R., 88250 Weingarten (DE)
(74) Vertreter: Kramer - Barske - Schmidtchen

(57) **Zusammenfassung**

Ein Verfahren zum Herstellen eines Bauteils mit einer bedruckten Echtholzoberfläche vorbestimmten Aussehens, enthält die Schritte
- Herstellen eines Grundkörpers, dessen Gestalt der des herzustellenden Bauteils entspricht und der zumindest an einer zu bedruckenden Seite eine Echtholzoberfläche aufweist,
- Bedrucken der Echtholzoberfläche mittels eines Tintenstrahldruckverfahrens mit einem Holzmaserungsmuster, dessen Maserung einer vorbestimmten Holzart entspricht, wobei die Bedruckung derart erfolgt, dass die noch nicht bedruckte Echtholzoberfläche durch das aufgedruckte Holzmaserungsmuster durchscheint.

## Beschreibung

Die Erfindung betrifft ein Verfahren zum Herstellen eines Bauteils mit einer bedruckten Echtholzoberfläche vorbestimmten Aussehens.

Aus der DE 100 31 030 ist ein Verfahren zum Herstellen flächiger Bauteile mit vorbestimmtem Aussehen ihrer Oberfläche bekannt, bei dem die Flächenbauteile mittels eines hinsichtlich des sich ergebenden Aussehens programmierbaren Verfahrens zur Ausbildung eines vorbestimmten Musters bedruckt werden. Beispielsweise können aus Holz bestehende Oberflächen mit einem Muster bedruckt werden, dessen Maserung einer vorbestimmten Holzart und dessen Farbe einem vorbestimmten Farbton entspricht. Mit dem Verfahren können auch dreidimensionale Oberflächen bedruckt werden.

Aus der DE 195 32 724 AI ist eine Mehrfarbendruckvorrichtung bekannt, die einen die Druckfarbe enthaltenden Druckkopf, beispielsweise Tintenstrahldruckkopf, und eine Führungseinrichtung für den zu bedruckenden Gegenstand enthält, mit der beliebig hohe Gegenstände dadurch bedruckt werden können, dass der Abstand zwischen der Druckeinheit und der Aufnahmefläche für den zu bedruckenden Gegenstand einstellbar ist.

In der EP 0 931 649 A2 ist eine Vorrichtung zum Bedrucken einer konturierten Oberfläche mit komplexer Topologie beschrieben, die einen beweglichen Druckkopf, beispielsweise Tintenstrahldruckkopf, zum Bedrucken der Oberfläche und einen Sensor enthält, der die Kontur der Oberfläche erfasst. Eine Steuereinrichtung betätigt den Druckkopf derart, dass er relativ zu der Oberfläche abhängig von der sensierten Kontur bewegt wird, so dass der Druckkopf der Kontur der Oberfläche in einem vorbestimmten Abstand folgt und die Oberfläche derart bedruckt wird, dass aus dem vorbestimmten Abstand gleichmäßig Tinte auf sie aufgebracht wird.

Ein Problem, das sich bei mit einer Oberfläche vorbestimmten Aussehens herzustellenden Bauteilen stellt, liegt darin, dass beispielsweise plattenförmige Bauteile, die mit einer Holzmaserung versehen werden, nicht das Aussehen von Echtholzplatten haben, da ihre Seitenflächen ebenso wie die Oberfläche zwar mit einer Holzmaserung bedruckt werden, die Holzmaserungen der Oberseite und der sichtbaren Seitenflächen jedoch nicht zusammenpassen, so dass der Betrachter von vornherein sieht, dass es sich um keine Massivholzplatte, sondern um eine furnierte Platte handelt.

Der Erfindung liegt die Aufgabe zugrunde, ein Verfahren zum Herstellen eines Bauteils mit einer bedruckten Echtholzoberfläche anzugeben, mit dem kostengünstig Bauteile mit hochwertig aussehenden Oberflächen herstellbar sind.

Die Ansprüche 1 und 3 sind auf Lösungen dieser Aufgabe gerichtet.

Die Unteransprüche kennzeichnen vorteilhafte Weiterbildungen der erfmdungsgemäßen Verfahren.

Die Erfindung wird im Folgenden anhand schematischer Zeichnungen beispielsweise und mit weiteren Einzelheiten erläutert.

### Es stellen dar:

- Fig. 1: eine Prinzipdarstellung des Aufbaus einer Vorrichtung zur Durchführung einer Tintenstrahlbedruckung,
- Fig. 2: ein Flussdiagramm zur Erläuterung der Herstellung eines nach dem erfindungsgemäßen Verfahren hergestellten Bauteils,
- Fig. 3: Teilschnitte von Bauteilen mit unterschiedlichen Rändern,
- Fig. 4: perspektivische Ansichten unterschiedlich geprägter Grundkörper,
- Fig. 5: Skizzen zur Erläuterung der Tintenstrahlbedruckung,
- Fig. 6: ein erfindungsgemäß hergestelltes Bauteil,
- Fig. 7: ein weiteres Beispiel für erfindungsgemäß hergestellte Bauteile, und
- Fig. 8: weitere erfindungsgemäß hergestellte Bauteile.

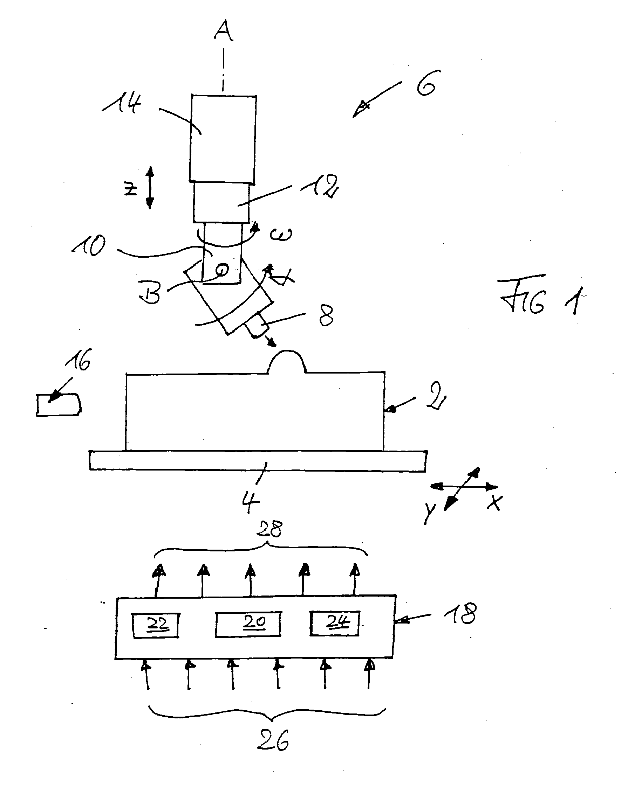

Gemäß Fig. 1 befindet sich ein Grundkörper 2 auf einer Transportplatte 4, die in einer senkrecht auf der Zeichenebene stehenden Ebene, d.h. in x- und y-Richtung, mittels nicht dargestellter Transporteinrichtungen bewegbar ist. Über der Transportplatte 4 befindet sich eine Tintenstrahldruckeinrichtung 6, die einen Tintenstrahlkopf 8 enthält, der an einem Arm 10 um eine im dargestellten Beispiel senkrecht auf der Zeichnungsebene stehende Achse B schwenkbar ist. Der Arm 10 ist an einer Konsole 12 um eine senkrechte Achse A schwenkbar gehalten, welche Konsole 12 wiederum relativ zu einem Zylinder 14 in Z-Richtung teleskopisch verschiebbar aufgenommen ist. Antriebseinrichtungen für die Schwenkbewegungen und die teleskopische Verschiebung sind nicht dargestellt.

Die Position des Grundkörpers 2 wird mittels einer Sensoreinrichtung 16 erfasst.

Zur Steuerung der Antriebe und des Tintenstrahldruckkopfes 8 ist ein elektronisches Steuergerät 18 vorgesehen, das einen Mikroprozessor 20 mit zugehörigen Programm- und Datenspeichern 22, 24 enthält. Eingänge 26 des Steuergerätes 18 sind mit der Sensoreinrichtung 16 verbunden; Ausgänge 28 sind mit den verschiedenen Antriebseinrichtungen und dem Tintenstrahldruckkopf verbunden.

Insgesamt ist es mit der beschriebenen Einrichtung möglich, den Tintenstrahldruckkopf 8 relativ zu dem Grundkörper 2 derart zu bewegen, dass der Tintenstrahldruckkopf 8 die gesamte Oberfläche des Grundkörpers 2 einschließlich dessen Seitenflächen unter Beibehaltung eines vorbestimmten Abstandes zwischen dem Tintenstrahldruckkopf 8 und der Oberfläche des Grundkörpers 2 und einem vorbestimmten Winkel zwischen dem vom Tintenstrahldruckkopf 8 abgespritzten Tintenstrahl und der Oberfläche des Grundkörpers 2 überstreicht. Wie ersichtlich, können auch Vorsprünge, Einbuchtungen oder sonstige Unebenheiten des Grundkörpers 2 auf diese Weise überstrichen werden.

Für die Antriebs- und Transporteinrichtungen, mit denen die Relativbewegungen zwischen Tintenstrahldruckkopf 8 und Oberfläche des Grundkörpers 2 erzielt werden, bestehen unterschiedlichste Möglichkeiten. Der Grundkörper 2 kann ortsfest sein und der Tintenstrahldruckkopf 8 kann bewegt und verschwenkt werden. Umgekehrt kann auch der Tintenstrahldruckkopf 8 ortsfest sein und der Grundkörper 2 verschwenkt und linear bewegt werden.

In dem Steuergerät 18 ist ein auf den Grundkörper 2 aufzubringendes Muster derart gespeichert, dass jedem Oberflächenpunkt des Grundkörpers 2 ein Farbpixel nach Art der Farbe und Menge zugeordnet ist. Die Rasterfeinheit (Pixelgröße) richtet sich nach den Erfordernissen und technischen Möglichkeiten. Für eine einwandfreie Zuordnung des augenblicklich vor dem Tintenstrahlkopf 8 befindlichen Oberflächenelements kann die Geometrie des Grundkörpers gesamthaft in dem Steuergerät 18 gespeichert werden, so dass mittels der Sensoreinrichtung 16 lediglich eine Referenzstellung des Grundkörpers 2 erfasst werden muss. In einer weitergebildeten Ausführungsform der Sensoreinrichtung können am Druckkopf 8 selbst Sensoren, beispielsweise Ultraschallsensoren, angebracht sein, die den Abstand zwischen Tintenstrahldruckkopf 8 und der Oberfläche des Grundkörpers 2 und deren Relativausrichtung erfassen. Eine beispielhafte Sensoreinrichtung ist in der eingangs genannten EP 0 931 649 A2 beschrieben.

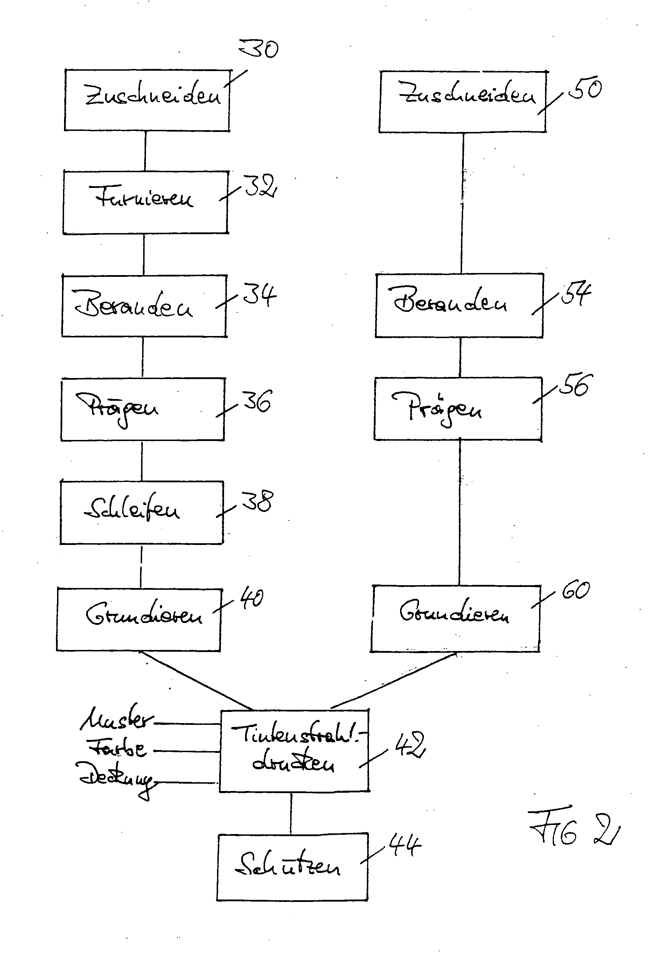

Anhand der Fig. 2 werden zwei typische Verfahrensabläufe zur Herstellung eines Bauteils mit einer Oberfläche vorbestimmten Aussehens beschrieben.

Der in Fig. 2 linke Ast entspricht der Herstellung eines Bauteils aus einem mit einer Echtholzoberfläche versehenen Grundkörper. Der rechte Ast entspricht der Herstellung eines Bauteils aus einem mit einer Kunststoffoberfläche versehenen Grundkörper.

Im Schritt 30 wird beispielsweise aus einer Pressspanplatte ein Rohkörper zugeschnitten, dessen Abmessungen etwa denen des herzustellenden Bauteils entsprechen. Der Rohkörper kann aus jedwelchem geeigneten Material bestehen, beispielsweise auch aus einer gewichtsgünstigen Honey-comb-Struktur, die aus Kunststoff oder Faserverbundwerkstoff besteht. Im dargestellten Beispiel wird angenommen, dass der Rohkörper plattenförmige Gestalt hat. Im Schritt 32 wird zumindest auf die Oberseite des Rohkörpers ein Echtholzfurnier in an sich bekannter Weise aufgebracht. Das Echtholzfurnier kann aus preiswertem Holz, beispielsweise Esche, Birke, Buche, Ulme oder anderen kostengünstigen Qualitätshölzern bestehen.

Im Schritt 34 werden die Seitenflächen des plattenförmigen, mit einem Furnier versehenen Rohkörpers, der beispielsweise einen Zentimeter dick ist, mit Randelementen versehen, die ebenfalls Holzfurniere sein können, aber auch durch Kunststoffumleimer usw. gebildet sein können. Weiter wird im Schritt 34 der Übergang zwischen den Randelementen und den anderen Flächen des Körpers mechanisch sauber bearbeitet, so dass die Abmessungen des nun einen Grundkörper bildenden Rohkörpers nach dem Schritt 34 dem des herzustellenden fertigen Bauteils entsprechen.

Im Schritt 36 wird die Oberfläche des Rohkörpers je nach Bedarf, beispielsweise durch Kalandrieren, mit einer Prägung versehen.

Im Schritt 38 wird die Oberfläche mit einer auf die nachfolgenden Schritte abgestimmten Rauhigkeit geschliffen.

Im Schritt 40 wird die beschliffene Oberfläche mit einer Grundierungsschicht versehen. Das Grundieren kann in einer ähnlich der Fig. 1 ausgebildeten Vorrichtung erfolgen, wobei der Tintenstrahldruckkopf 8 durch einen Spritzkopf ersetzt ist. Das Grundieren kann auch in anderen Vorrichtungen erfolgen, beispielsweise durch Eintauchen des Grundkörpers in Grundierungsflüssigkeit.

Der Grundierungsschritt 40 dient in erster Linie dazu, dass die in dem nachfolgenden Tintenstrahlbedruckungsschritt 42 aufgebrachte Tinte auf der Oberfläche gut haftet und in vorbestimmter Weise verläuft. In dem Tintenstrahldruckverfahrensschritt wird auf die Oberfläche ein Muster aufgebracht, das im Wesentlichen durch drei Datensätze bestimmt ist, nämlich
- die Geometrie des Musters, die das Musterornament beispielsweise in schwarz-weiß als Linienmuster mit dem Schwärzungsgrad der einzelnen Oberflächenelemente festlegt,
- die Farbe des Musters, die die Farbe der einzelnen Oberflächenelemente festlegt, und
- der Deckungsgrad des Musters, der die Farbmenge mit der Maßgabe festlegt, inwieweit die Oberfläche des noch nicht bedruckten Grundkörpers durch die Druckschicht hindurchscheinen soll. Es versteht sich, dass der Deckungsgrad sowohl durch die Deckfähigkeit der Tinte als auch durch die aufgebrachte Tintenmenge bestimmt wird.

An den Schritt 42 schließt sich ein Schritt 44 an, in dem der tintenstrahlbedruckte Grundkörper mit einer Schutzschicht versehen wird, die durch Spritzen, Rollen, Tauchen usw. aufgebracht werden kann.

Wenn von einem Rohkörper beziehungsweise einer Platte mit Kunststoffoberfläche, beispielsweise einer melaminbeschichteten Platte ausgegangen wird, die flächig nicht furniert werden soll, wird in einem Schritt 50 eine Rohplatte ausgeschnitten, die im Schritt 54 mit einer Umrandung, beispielsweise einem Umleimer, versehen wird. Zusätzlich wird im Schritt 54 der Übergang zwischen dem Umleimer und der Plattenoberfläche mechanisch sauber bearbeitet, so dass die Gestalt des hergestellten Grundkörpers dem eines herzustellenden Bauteils entspricht.

Im Schritt 56 wird der Grundkörper im Bedarfsfall mit einer Prägung versehen.

Auf den Schritt 56 folgt ein Grundierschritt 60, in dem die Oberfläche des Grundkörpers derart grundiert wird, dass die im nachfolgenden Tintenstrahlbedruckungsschritt 42 aufgebrachte Tinte einwandfrei auf der Oberfläche haftet. An den Schritt 42 schließt sich zur Fertigbearbeitung der Schutzschritt 44 an.

Im Folgenden werden einige Aspekte der beschriebenen Schritte erläutert.

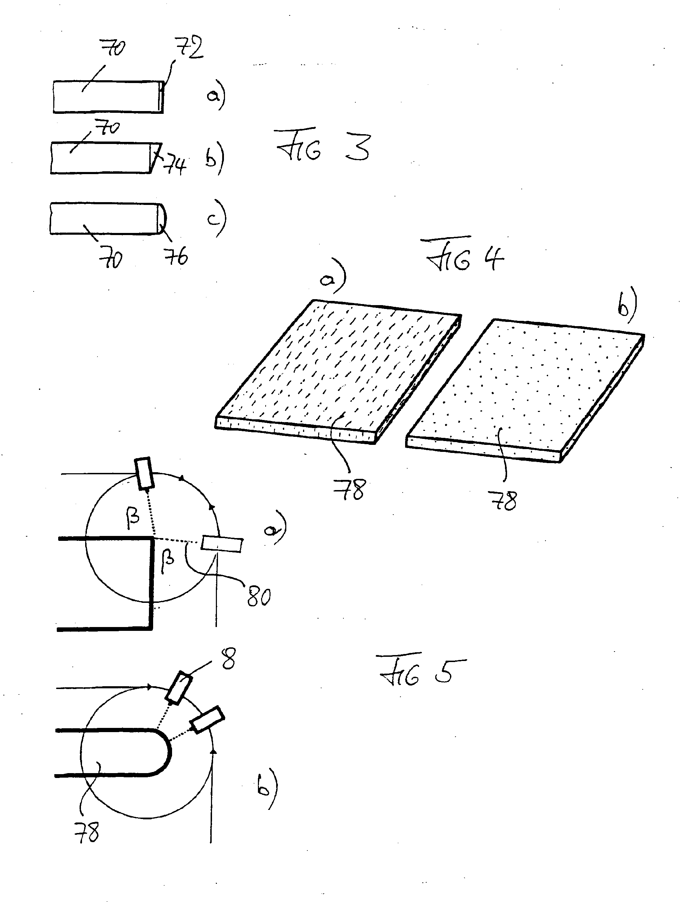

Fig. 3 zeigt unterschiedliche, an einem Rohkörper 70 ausgebildete Randelemente. Fig. 3a zeigt ein Randelement 72, das als Leiste bzw. Streifen einheitlicher Dicke ausgebildet ist. Das Randelement gemäß Fig. 3b weist dreieckigen Querschnitt auf. Das Randelement 76 ist gerundet.

Nach Aufbringen der Randelemente wird der Übergangsbereich zwischen dem Randelement und dem Rohkörper jeweils sauber mechanisch bearbeitet, so dass der hergestellte Grundkörper keine Unsauberkeiten im Übergang zu dem bzw. zu den Randelementen hat. Bei geeigneter Beschaffenheit des Rohkörpers kann dessen Rand auch ohne jedwelches gesondert aufgebrachtes Randelement lediglich durch mechanische Bearbeitung geformt werden.

Fig. 4 verdeutlicht in den Figurenteilen a) und b) unterschiedliche Oberflächenbeschaffenheiten des jeweiligen Grundkörpers 78.

Gemäß Fig. 4a sind in die Oberflächen strich- bzw. schlitzförmige Einschnitte geprägt. In Fig. 4b ist die Oberfläche mit punktförmigen Vertiefungen bzw. Löchern geprägt. Die Strukturierung kann je nach Verwendungszweck des herzustellenden Bauteils und angestrebtem Oberflächenaussehen unterschiedlich sein; reliefartige Oberflächenstrukturen, wie sie beispielsweise durch Grobschleifen hergestellt werden können, sind ebenso möglich wie Feinkalandrierungen. Durch die Prägungen 36 bzw. 56 wird das Aussehen der tintenstrahlbedruckten Oberfläche maßgeblich mitbeeinflusst, da die Prägung nach dem Bedrucken wegen der sich dort sammelnden Tinte im allgemeinen verstärkt in Erscheinung tritt.

Der Schleifschritt 38 beeinflusst das Aussehen der nachfolgenden Tintenstrahlbedruckung ebenfalls stark. Ein grober Schliff führt zu einem Verlaufen der Farbpunkte. Mit zunehmend feinerem Schliff lassen sich zunehmend scharf gezeichnete Musterungen aufbringen.

Die im Schritt 40 bzw. 60 aufgebrachte Grundierung dient nicht nur einer guten Haftung der aufgedruckten Tinte. Mit der Grundierung kann auch das Saugverhalten der Oberfläche beeinflusst werden, was zusätzlich zur Menge und zum Farbstoffgehalt der Tinte Einfluss darauf hat, ob das durch Tintenstrahlbedruckung aufgebrachte Muster voll deckend oder lediglich lasierend ist.

Fig. 5 verdeutlicht einen Aspekt, der beim Bedrucken von Rändern einer Platte oder stark gekrümmten Oberflächenbereichen wichtig ist.

Gemäß Fig. 5a werden Kanten vorzugsweise derart bedruckt, dass der Tintenstrahl 80 der gerade bedruckten Fläche nicht auf die benachbarte Fläche gelangt. Dies wird dadurch erreicht, dass der Winkel β zwischen dem Tintenstrahl und der gerade bedruckten Oberfläche etwas kleiner als 90 ist, so dass die nicht bedruckte Oberfläche abgeschattet ist. Über dem abgeschatteten Bereich kann, um völlig sicherzustellen, dass sich dort keine Tinte absetzt, eine Absaugeinrichtung, beispielsweise eine Unterdruckdüse, angeordnet sein.

Wenn der Tintenstrahldruckkopf 8 gemäß Fig. 5b sich mit einem vorbestimmten Abstand und unter Beibehaltung einer vorgegebenen Ausrichtung, vorzugsweise eines etwa rechten Winkels, zum gerade bedruckten Oberflächenelement längs eines gerundeten Randes eines Grundskörpers 78 relativ zu diesem bewegt, erfolgt die Tintenstrahlbedruckung vorzugsweise derart, dass die auf eine Oberflächeneinheit gelangende Tintenmenge unabhängig von der Krümmung der Oberfläche des Grundkörpers 78 ist.

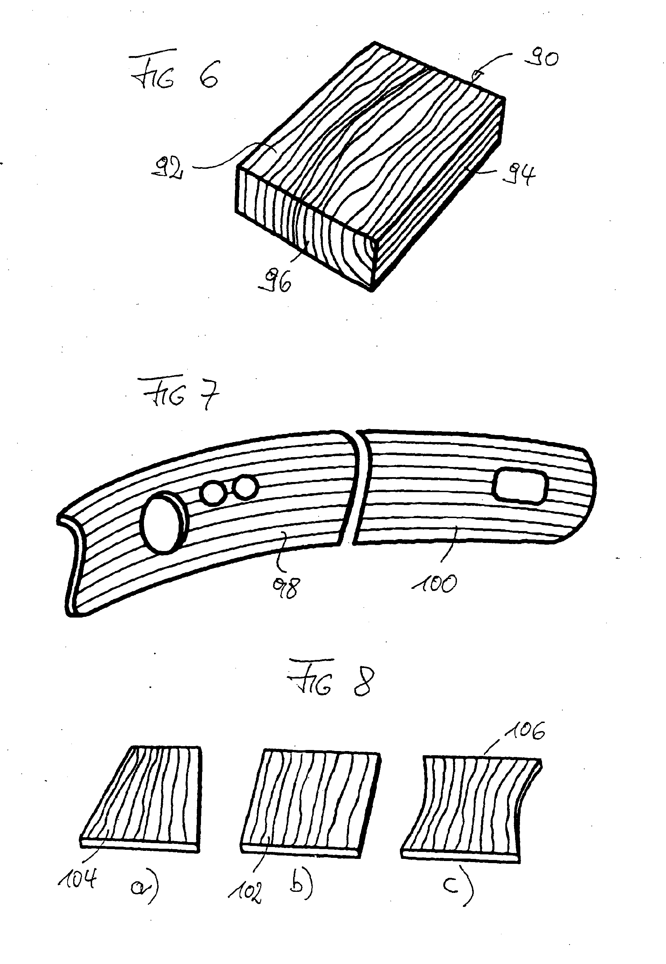

Fig. 6 zeigt eine perspektivische Ansicht eines nach dem erfindungsgemäßen Verfahren herstellbaren Bauteils, beispielsweise eines einen Teil einer Frontseite einer Küche bildenden Deckels. Das Bauteil 90 weist eine Oberseite 92 und zwei Seitenflächen 94 und 96 auf. Wie ersichtlich, sind die Holzmaserungsmuster auf die Oberseite 92 und die Seitenflächen 94 und 96 derart ausgebildet, dass das Aussehen einem Echtholzbrett entspricht, das aus einem Baum ausgeschnitten ist, wobei die Schnittrichtungen parallel zur Seitenfläche 96 und senkrecht zur Seitenfläche 94 bzw. der Oberseite 92 liegen. Das Holzmaserungsmuster der Seitenfläche 96 entspricht somit einem Stirnholz. Wie ersichtlich, schließen die Maserungen der Seitenflächen 94 und 96 an die Maserung der Oberseite 92 stetig an, d.h. die Maserungslinien gehen in den Kanten ineinander über.

Nach dem erfindungsgemäßen Verfahren lassen sich allein durch entsprechende Datensätze im Tintenstrahldruckschritt 42 unterschiedlichste Holzarten mit unterschiedlichsten Nuancierungen in einem von Echtholz nicht unterscheidbaren Aussehen darstellen. Besonders gut gelingt dies, wenn der Schritt 42 (Fig. 2) auf einem mit Naturholz furnierten Grundkörper ausgeführt wird. Das Holzfurnier verleiht dem bedruckten Grundkörper ein Echtholzaussehen, wobei eine Eigenmaserung der Furnierung durch die aufgedruckte Maserung derart überdeckt wird, dass sie nicht mehr in Erscheinung tritt. Durch zweckentsprechende Prägung, Schleifung und Grundierung ist der Grundkörper derart vorbereitet, dass das aufgebrachte Muster von einer Echtholzmaserung nicht unterscheidbar ist. Die im Schritt 44 aufgebrachte Schutzschicht, beispielsweise transparenter Zweikomponentenlack mit dem jeweiligen Bedarf entsprechendem Glanz, macht das erfindungsgemäß hergestellte Bauteil strapazierfähig und verschleißfest.

Für die Datengewinnung der in dem Steuergerät gespeicherten Muster gibt es verschiedene Möglichkeiten. Beispielsweise können die Muster unmittelbar von einer Vorlage des Grundkörpers in Massivholz abgenommen und als Datensätze zur Steuerung des Tintenstrahldruckkopfes ähnlich wie beim Ausdrucken einer Farbvorlage verwendet werden. Alternativ können Muster nach entsprechenden Vorlagen rechnerisch generiert werden, so dass unterschiedlichste Muster, die nicht auf Holzmaserungsmuster begrenzt sind, erzeugt werden können. Dabei erfolgt die Datenberechnung jeweils derart, dass die Musterkonturen (und Farben) entsprechend den jeweiligen Schnitten an den Kanten (die auch mit Krümmungsradien ausgebildet sein können), ineinander übergehen. In Datenspeichern kann ein Mustervorrat unterschiedlichster Hölzer oder anderweitiger geometrischer oder räumlicher Muster gespeichert sein, die jeweils entsprechend der gewünschten Größe ausgelesen und zum Drucken benutzt werden.

Wenn mit mit Holzfurnieren versehenen Grundkörpern gearbeitet wird, kann durch die Farbe oder Färbung des Furniers das Aussehen des fertigen Grundkörpers beeinflusst werden. Weiß gebleichte Furniere fuhren zu einer klareren Farbprägung des fertigen Musters. Getönte Furniere ergeben weniger ausgeprägte, homogenere Färbungen des fertigen Musters, wenn nicht mit hohem Deckungsgrad gearbeitet wird.

Mit dem beschriebenen Verfahren können unterschiedlichste Bauteile hergestellt werden, die von dem einfachen, nur auf einer Oberflächenseite bedruckten Parkettelement (das entsprechend verschleißfest beschichtet ist), bis zu komplizierter geformten dreidimensionalen Bauteilen reichen, beispielsweise Innenraumdekorteilen in Kraftfahrzeugen.

Fig. 7 zeigt ein Beispiel zweier erfindungsgemäß mit Holzmaserungsmustern bedruckter Fahrzeuginnenraumdekorbauteile 98 und 100. Wie ersichtlich, sind die Holzmaserungsmuster in dem Bereich, in dem die Bauteile 98 und 100 aneinander angrenzen, derart aufeinander abgestimmt, dass sie sich entsprechen bzw. ineinander übergehen. Auf diese Weise entsteht der Eindruck, dass die beiden Bauteile 98 und 100 aus einem einzigen Naturholzstück hergestellt sind, was die Wertigkeit des Aussehens erhöht.

Fig. 8 zeigt, wie durch entsprechende Datenverarbeitung gespeicherte Muster an die Geometrie des herzustellenden Bauteils angepasst werden können. Fig. 8b zeigt ein Grundmuster eines rechteckigen Bauteils 102. Fig. 8a zeigt das dem Bauteil 102 entsprechende Muster auf einem Bauteil 104, das gemäß der Figur sich nach oben verjüngt. Die Musterlinien sind entsprechend der Verjüngung des Bauteils komprimiert.

Fig. 8c zeigt ein Bauteil 106, das in seinem mittleren Bereich eingeschnürt ist. Das Muster ist entsprechend der Einschnürung des Bauteils eingeschnürt. Es versteht sich, dass die Abwandlungen des auf dem Bauteil 102 vorhandenen Musters entsprechend dem Bauteil 104 und 106 allgemein nicht mehr einem natürlichen Massivholzmuster entsprechen; die mit der Kompression der Muster erzeugten Effekte bewirken jedoch ein ästhetisch ansprechendes Aussehen der Bauteile.

Die Erfindung kann in unterschiedlichster Weise abgeändert werden. Es können verschiedene Verfahrensschritte in unterschiedlichster Weise miteinander kombiniert werden, so dass, mit Ausnahme des Tintenstrahldruckverfahrens, nur einzelne Schritte der Abläufe gemäß Fig. 2 vorhanden sein müssen. Im gemäß Fig. 2 linken Ast kann, wenn der Ausgangskörper beispielsweise ein Massivholzkörper aus einfachem Holz ist, die Furnierstufe, die Berandungsstufe und die Prägestufe fehlen. Im rechten Ast kann zusätzlich eine Furnierstufe und eine Schleifstufe vorgesehen sein. Die Prägestufen können in beiden Ästen fehlen usw.

Die Feinbearbeitung der Randelemente derart, dass beim Bedrucken der Übergang zwischen dem Randelement und dem Rohkörper nicht mehr sichtbar ist, kann innerhalb des Schleifschrittes 38 folgen usw.

Als Tinten werden beispielsweise Pigmenttinten verwendet, wie sie auch in Plottern eingesetzt werden. Für die Grundierung von Kunststoffoberflächen werden handelsübliche Primer bzw. Haftvermittler eingesetzt. Für die Holzgrundierung werden ggfs. übliche Holzgrundierungsflüssigkeiten eingesetzt. Für die Schutzschicht eignen sich übliche transparente Lacke, die zu einer hochfesten Schicht härten. Bei Verwendung als Parkettelement können übliche Parkettversiegelungen verwendet werden.

Der Anmelder behält sich vor, einzelne Merkmale und Ansprüche auch für sich und nicht in Kombination mit denen anderer Ansprüche zu beanspruchen.

Mit der Erfindung werden zahlreiche Vorteile erzielt, die nicht nur das Aussehen der hergestellten Bauteile, sondern vor allem deren Kosten betreffen. Aus kostengünstigen Rohteilen können Bauteile mit höchstwertigstem Aussehen hergestellt werden, die höchste Qualitätsanforderungen erfüllen. Bezüglich der Lagerhaltung ist lediglich ein Vorrat mit geringer Vielfalt (Größen, Material des Rohkörpers) erforderlich. Die kundenrelevante Vielfalt hinsichtlich Holzart, Oberflächendesign und so weiter wird erst kurz vor der Auslieferung aufgrund des Bestelleingangs durch Tintenstrahlbedruckung erzielt.

### Bezugszeichenliste

- 2: Grundkörper
- 4: Transportplatte
- 6: Tintenstrahldruckeinrichtung
- 8: Tintenstrahldruckkopf
- 10: Arm
- 12: Konsole
- 14: Zylinder
- 16: Sensoreinrichtung
- 18: Steuergerät
- 20: Mikroprozessor
- 22: Speicher
- 24: Speicher
- 26: Eingänge
- 28: Ausgänge
- 72: Randelement
- 74: Randelement
- 76: Randelement
- 78: Grundkörper
- 80: Tintenstrahl
- 90: Bauteil
- 92: Oberseite
- 94: Seitenfläche
- 96: Seitenfläche
- 98: Bauteil
- 100: Bauteil
- 102: Bauteil
- 104: Bauteil
- 106: Bauteil

## Patentansprüche

1. Verfahren zum Herstellen eines Bauteils mit einer bedruckten Echtholzoberfläche vorbestimmten Aussehens, enthaltend die Schritte
- Herstellen eines Grundkörpers, dessen Gestalt der des herzustellenden Bauteils entspricht und der zumindest an einer zu bedruckenden Seite eine Echtholzoberfläche aufweist,
- Bedrucken der Echtholzoberfläche mittels eines Tintenstrahldruckverfahrens mit einem Holzmaserungsmuster, dessen Maserung einer vorbestimmten Holzart entspricht, wobei die Bedruckung derart erfolgt, dass die Echtholzoberfläche durch das aufgedruckte Holzmaserungsmuster durchscheint.

2. Verfahren nach Anspruch 1, wobei die Echtholzoberfläche vor der Tintenstrahlbedruckung mit einer mechanischen Prägung versehen wird.

3. Verfahren zum Herstellen eines Bauteils mit einer bedruckten Echtholzoberfläche vorbestimmten Aussehens, enthaltend die Schritte
- Herstellen eines Grundkörpers, dessen Gestalt der des herzustellenden Bauteils entspricht und der zumindest an einer zu bedruckenden Seite eine Echtholzoberfläche aufweist,
- Versehen der zu bedruckenden Echtholzoberfläche mit einer mechanischen Prägung,
- Bedrucken der mit der mechanischen Prägung versehenen Echtholzoberfläche mittels eines Tintenstrahldruckverfahrens mit einem Holzmaserungsmuster, dessen Maserung einer vorbestimmten Holzart entspricht, wobei die Bedruckung derart erfolgt, dass die Echtholzoberfläche nicht durch das aufgedruckte Holzmaserungsmuster durchscheint.

4. Verfahren nach einem der Ansprüche 1 bis 3, wobei die Maserung des aufgedruckten Holzmaserungsmusters einer von der Holzart der Echtholzoberfläche verschiedenen Holzart entspricht.

5. Verfahren nach einem der Ansprüche 1 bis 4, **dadurch gekennzeichnet, dass** die Tintenstrahlbedruckung entsprechend Daten erfolgt, die in einem Datensatz die Geometrie der Holzmaserung, in einem weiteren Datensatz die Farbgebung der Holzmaserung und in einem zusätzlichen Datensatz den Deckungsgrad der Farbgebung enthält.

6. Verfahren nach Anspruch 5, **dadurch gekennzeichnet, dass** die Datensätze an die Geometrie des herzustellenden Bauteils angepasst werden.

7. Verfahren nach Anspruch 3, wobei die mit einer mechanischen Prägung versehene Echtholzoberfläche vor der Tintenstrahlbedruckung zu einer vorbestimmten Rauhigkeit geschliffen wird.

8. Verfahren nach einem der Ansprüche 1 bis 7, wobei die Echtholzoberfläche **dadurch** erzeugt wird, dass ein Grundkörper mit einem Echtholzfurnier versehen wird.

9. Verfahren nach Anspruch 8, **dadurch gekennzeichnet, dass** das Holzfurnier vor der Tintenstrahlbedruckung mit dem Holzmaserungsmuster in einer homogenen Grundfarbe getönt wird.

10. Verfahren nach einem der Ansprüche 1 bis 9, wobei auf das durch Tintenstrahlbedruckung hergestellte Holzmaserungsmuster eine Schutzschicht aufgebracht wird.

11. Verfahren nach einem der Ansprüche 1 bis 10, wobei in einem Arbeitsschritt unmittelbar vor der Tintenstrahlbedruckung auf das zu bedruckende Bauteil eine Grundierung aufgebracht wird.
